# EUROPEAN PATENT SPECIFICATION

(11) **EP 2 781 850 B1**
(45) Date of publication and mention of the grant of the patent: **15.03.2023**
(21) Application number: 12842451.2
(22) Date of filing: 02.10.2012
(51) Int. Cl.: F24F 11/30, F24F 11/79, F24F 120/10, F24F 120/12, F24F 120/14, F24F 1/0007, F24F 1/0057

(54) **AIR CONDITIONER INDOOR UNIT**
KLIMAANLAGEN-INNENRAUMEINHEIT
UNITÉ INTÉRIEURE DE CLIMATISEUR

(30) Priority: 18.10.2011 JP 2011228752; 01.02.2012 JP 2012019905
(43) Date of publication of application: 24.09.2014
(73) Proprietor: Mitsubishi Electric Corporation, Tokyo 100-8310 (JP)
(72) Inventor: MATSUMOTO, Taka, Tokyo 100-8310 (JP); YANO, Hirotoshi, Tokyo 100-8310 (JP)
(74) Representative: Brevalex
(86) International application number: PCT/JP2012/075494
(87) International publication number: WO 2013/058097

(56) References cited:
- JP-A- H05 178 064
- JP-A- H07 293 970
- JP-A- 2006 220 405
- JP-A- 2010 183 322
- JP-A- 2010 261 643
- JP-A- 2011 169 536
- JP-A- 2011 169 536
- JP-B2- 3 807 305

## Description

### Technical Field

The present invention relates to indoor units of air-conditioning apparatuses, and more particularly relates to an indoor unit of an air-conditioning apparatus, the indoor unit which can change the blowing direction of conditioned air.

### Background Art

To enhance comfortableness of a person who is present in a room (hereinafter referred to as "indoor person"), an indoor unit of an air-conditioning apparatus (hereinafter referred to as "indoor unit"), the indoor unit of which detects the position of the indoor person and sends the air so as to avoid the indoor person or contrarily sends the air toward the indoor person, has been conventionally known.

Not only the position of the indoor person is merely detected, but also the activity state of the indoor person is detected, and the temperature, blowing amount, and blowing direction of the conditioned air are controlled based on the activity state. That is, the indoor unit, which restricts an increase in body temperature by sending the air intensively toward the indoor person (hereinafter referred to as "user") and removing the heat generated by the activity, and prevents the user from feeling hot if the indoor unit detects that the activity amount is increased because of a light exercise or a light physical work, has been disclosed (for example, see Patent Literature 1).

JP 2011 169 536 A discloses an indoor unit comprising an image pickup device configured for recognizing a user and for recognizing an operator of a remote controller wherein an operating condition selected by the operator is stored and when a presence of the operator in the room is recognized, air conditioning operation is performed according to the previously stored operating conditions.

### Citation List

### Patent Literature

Patent Literature 1: Japanese Unexamined Patent Application Publication No. 6-323599 (pp. 3-5, Fig. 2)

### Summary of Invention

### Technical Problem

However, with the indoor unit disclosed in Patent Literature 1, the conditioned air is not sent intensively toward a user whose activity amount is not increased, and normal air sending is provided to such a user. With this configuration, even when the activity amount of a user is not increased, since an individual has own sensitive temperature which is different from another individual, there may be a user who feels hot with the normal air sending (hereinafter referred to as "person who is sensitive to heat") or a user who feels cold with the normal air sending (hereinafter referred to as "person who is sensitive to cold"). Therefore, there is a demand to also maintain comfortableness of the person who is sensitive to heat or cold.

Also, the user desires to be rapidly cooled (or heated) immediately after the user enters the room from the hot (or cold) outdoor environment, by eliminating a cumbersome work of searching for a remote controller (remote operation device) and operating the remote controller for activation. In particular, immediately after the user takes a bath or the user enters the room from the hot (or cold) outdoor environment, the user desires to be temporarily rapidly cooled (or heated).

The present invention responds to the above-described demands and desires, and the first object is to obtain an indoor unit of an air-conditioning apparatus, the indoor unit which enhances comfortableness of users having different sensitive temperatures. Also, the second object is to obtain an indoor unit of an air-conditioning apparatus, the indoor unit which can increase convenience. Further, the third object is to obtain an indoor unit of an air-conditioning apparatus, the indoor unit which can provide temporal rapid cooling (heating).

### Solution to Problem

An indoor unit of an air-conditioning apparatus according to the present invention is defined in claim 1. Preferred embodiments are defined in the dependent claims. According to the present invention, the indoor unit includes a main body having an air inlet and an air outlet, the main body being installed on a wall surface in a room; a fan configured to suck indoor air from the air inlet and form an air path to the air outlet; a heat exchanger arranged in the air path and executes part of a refrigeration cycle; a wind-direction adjusting device arranged at the air outlet and configured to adjust a blowing direction of air conditioned by the heat exchanger; an image pickup device configured to capture an image of the inside of the room; a controller configured to control the wind-direction adjusting device based on information on a person whose image has been captured by the image pickup device; and a receiver configured to receive a signal from a remote controller. The controller recognizes a face of a person, when the face of the person is present within a face recognition range between a first distance and a second distance, greater than the first distance, from the image pickup device in a field of the image pickup device, when the person whose face has been recognized moves, tracks the person whose face has been recognized and specifies a position of the person whose face has been recognized, and controls the wind-direction adjusting device so that the conditioned air is blown toward the specified position.

### Advantageous Effects of Invention

With the indoor unit of the air-conditioning apparatus according to the present invention, when the face of the user who approaches the main body (for example, a person who is sensitive to heat or cold) is recognized, the indoor unit tracks the user and specifies the location of the user, and sends the air that is conditioned (hereinafter referred to as "conditioned air") toward the specified position. Accordingly, the comfortableness of the user is enhanced. Also, since the conditioned air is sent toward the user who comes into the room after the user once approaches the indoor unit although the user moves to any position in the room, the cumbersome work of operating the wind-direction adjusting device can be omitted, and thus the convenience is increased.

Further, while the refrigeration cycle is stopped, if the refrigeration cycle is activated when the face of the user is recognized, the cumbersome work of searching for the remote controller or the like can be omitted, and thus the convenience is increased.

### Brief Description of Drawings

[Fig. 1] Fig. 1 is a front view for explaining an indoor unit of an air-conditioning apparatus according to Embodiment 1 of the present invention.
[Fig. 2] Fig. 2 is a cross section in a side view for explaining the indoor unit shown in Fig. 1.
[Fig. 3] Fig. 3 is a perspective view showing part (around an air outlet) for explaining the indoor unit shown in Fig. 1.
[Fig. 4] Fig. 4 is a side view showing an installation state of the indoor unit shown in Fig. 1 in a room.
[Fig. 5] Fig. 5 is a flowchart explaining processes of wind-direction control of the indoor unit shown in Fig. 1.
[Fig. 6] Fig. 6 is a flowchart explaining processes of the wind-direction control of the indoor unit shown in Fig. 1.
[Fig. 7] Fig. 7 is a set of plan views each showing airflows under the wind-direction control of the indoor unit shown in Fig. 5.
[Fig. 8] Fig. 8 is a set of plan views each showing airflows under the wind-direction control of the indoor unit shown in Fig. 6.
[Fig. 9] Fig. 9 is a flowchart for explaining an indoor unit of an air-conditioning apparatus according to Embodiment 2 of the present invention.
[Fig. 10] Fig. 10 is a temperature change chart schematically showing a change in temperature of swing blowing for explaining an indoor unit of an air-conditioning apparatus according to Embodiment 3 of the present invention.
[Fig. 11] Fig. 11 is a flowchart for explaining control steps of the air-conditioning apparatus according to Embodiment 3 of the present invention.

### Description of Embodiments

### [Embodiment 1]

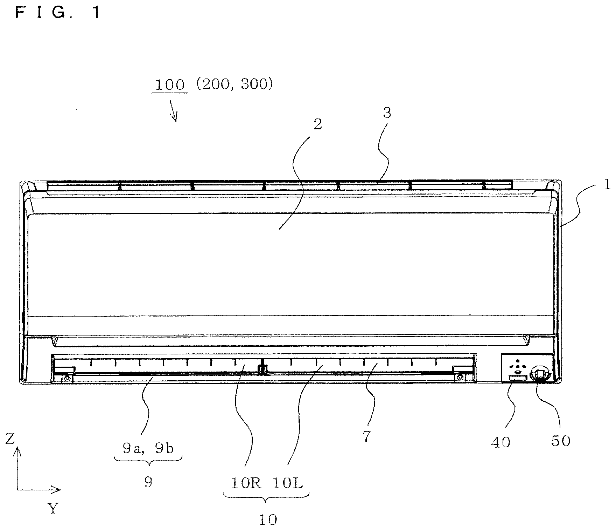

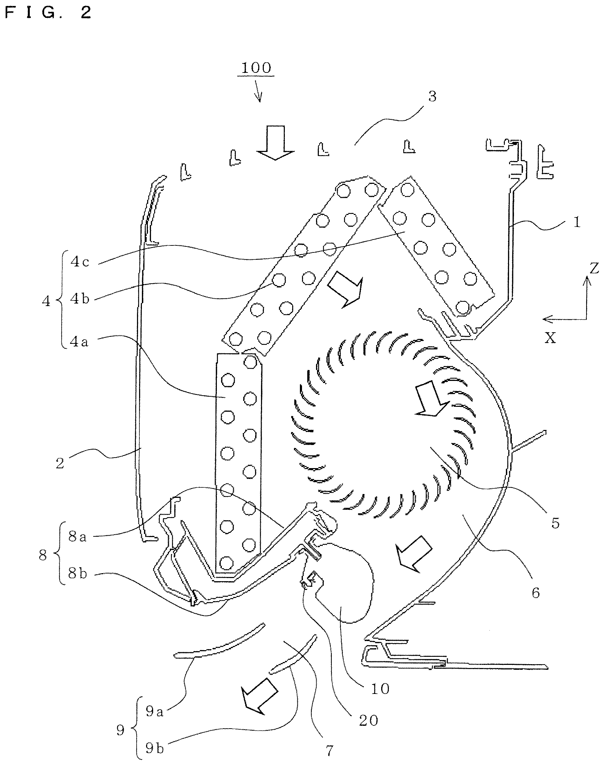

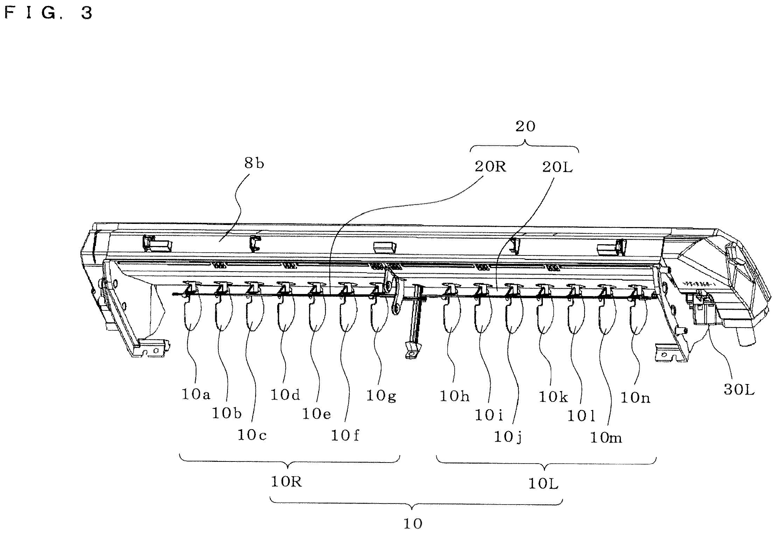

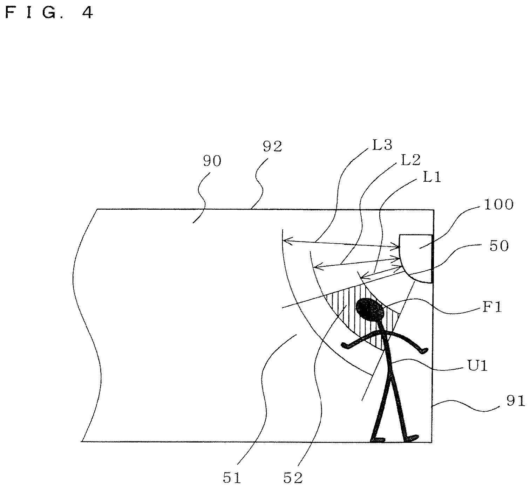

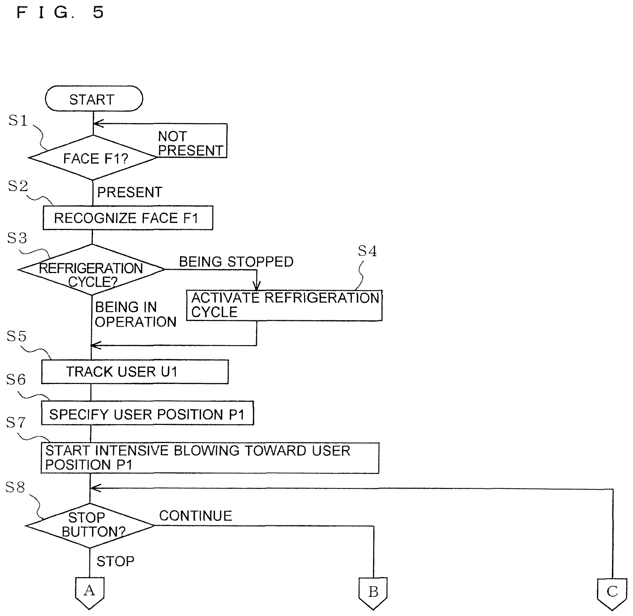

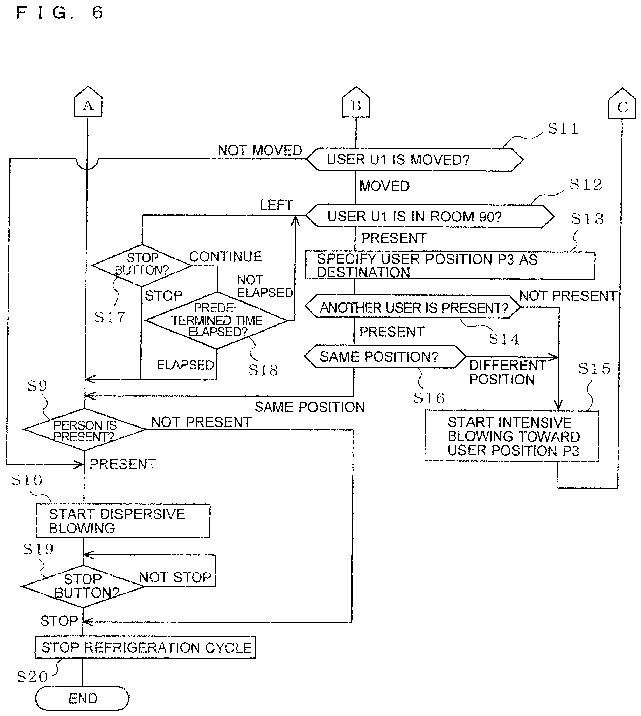

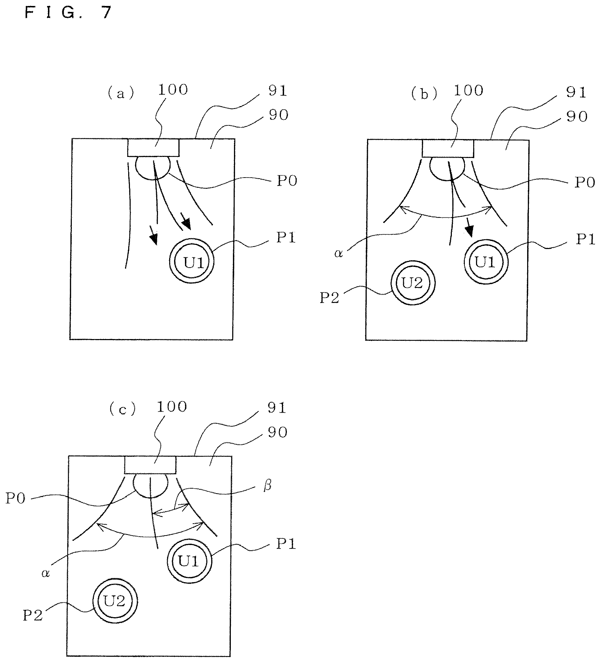

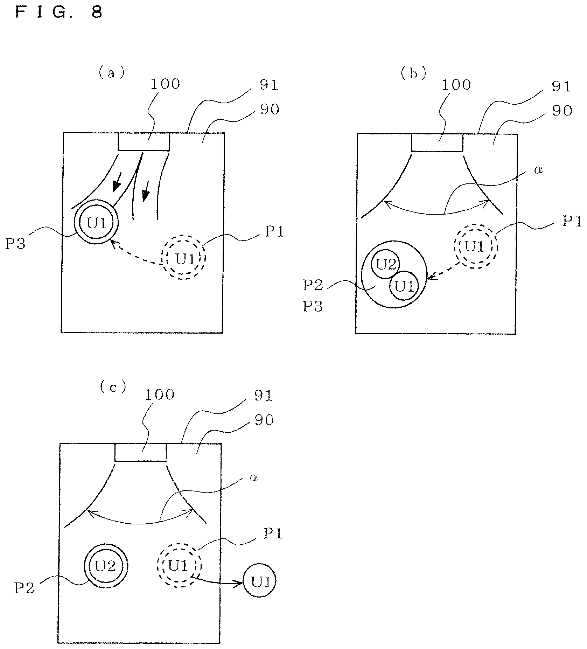

Figs. 1 to 8 explain an indoor unit of an air-conditioning apparatus according to Embodiment 1 of the present invention. Fig. 1 is a front view. Fig. 2 is a cross section in a side view. Fig. 3 is a perspective view showing extracted part (around an air outlet). Fig. 4 is a side view showing an installation state in a room. Figs. 5 and 6 are flowcharts explaining processes in wind-direction control. Figs. 7 and 8 are plan views showing airflows under the wind-direction control. It is to be noted that the respective drawings are schematically illustrated, and the present invention is not limited to Embodiment 1 shown in the drawings.

In Figs. 1 to 3, an indoor unit 100 of the air-conditioning apparatus (hereinafter referred to as "indoor unit") includes a main body 1 having an air inlet 3 formed in an upper portion and an air outlet 7 formed in a lower portion thereof, a front panel 2 that covers a front surface of the main body 1 in a manner that the front panel 2 can be opened and closed, a fan 5 that forms an air path 6, which is the path flowing from the air inlet 3 through which indoor air is sucked to the air outlet 7, and a heat exchanger 4 arranged upstream of the fan 5 (near the air inlet 3).

Also, a receiver 40 that receives a signal from a remote controller (not shown) and an image pickup device 50 that captures an image of a state in the room are arranged at positions beside the air outlet 7 at the front surface of the main body 1.

The present invention does not limit the models and arrangement positions of the receiver 40 and the image pickup device 50. For example, the receiver 40 and the image pickup device 50 may be arranged in a center portion or other portion of the front panel 2. Further, a notification device (not shown) using voice or video for notification about an operation state of the indoor unit is provided at the main body 1 or the remote controller (not shown).

The heat exchanger 4 includes a heat-exchanger front portion 4a that is a portion being substantially parallel to the front panel 2, a heat-exchanger upper front portion 4b that is a portion near a front side of the fan 5 and extending obliquely upward, and a heat-exchanger upper rear portion 4c that is a portion near a rear side of the fan 5 and extending obliquely upward. Also, a drain pan 8 is arranged below the heat-exchanger front portion 4a. An upper surface 8a of the drain pan 8 forms a drain pan surface that actually receives drain. A lower surface 8b of the drain pan 8 forms a front side of the air path 6.

### (Wind-direction Adjusting Device)

A left horizontal wind-direction plate group 10L and a right horizontal wind-direction plate group 10R (these are collectively or individually referred to as "horizontal wind-direction plate 10") that adjust a blowing direction of the indoor air conditioned by the heat exchanger 4 (hereinafter referred to as "conditioned air") in the horizontal direction (left-right direction) are provided at positions near the air outlet 7 of the air path. A vertical wind-direction plate 9 (a front vertical wind-direction plate 9a and a rear vertical wind-direction plate 9b are collectively referred to as "vertical wind-direction plate 9") that adjusts a blowing direction of the conditioned air in the vertical direction (up-down direction) is provided at the air outlet 7 that is an end of the air path 6. The left horizontal wind-direction plate group 10L and a right horizontal wind-direction plate group 10R, and the vertical wind-direction plate 9 form a wind-direction adjusting device.

It is to be noted that the "left" and "right" respectively represent "left" and "right" when the inside of the room is viewed from the indoor unit 100, that is, when the front panel 2 is viewed from the rear surface of the main body 1.

### (Horizontal Wind-direction Plate)

The right horizontal wind-direction plate group 10R includes horizontal wind-direction plates 10a, 10b, ..., and 10g, are rotatably arranged at the lower surface 8b of the drain pan 8, and are coupled with a right coupling rod 20R. Also, the left horizontal wind-direction plate group 10L includes horizontal wind-direction plates 10h, 10i, ..., and 10n, and are coupled with a left coupling rod 20L.

The right horizontal wind-direction plate group 10R and the right coupling rod 20R form a link mechanism. The left horizontal wind-direction plate group 10L and the left coupling rod 20L form a link mechanism. The right coupling rod 20R is coupled with right driving means (not shown). The left coupling rod 20L is coupled with left driving means 30L.

Hence, when the right coupling rod 20R is translated by the right driving means, the horizontal wind-direction plates 10a, 10b, ..., and 10g are rotated while maintaining the plates to be parallel to each other. When the left coupling rod 20L is translated by the left driving means 30L, the horizontal wind-direction plates 10h, 10i, ..., and 10n are rotated while maintaining the plates to be parallel to each other. Hence, the conditioned air from the entire-width area of the air outlet 7 can be blown in the same direction, the conditioned air from the half-width area of the air outlet 7 and the conditioned air from the other half-width area of the air outlet 7 can be blown in directions to be separated from each other, or the conditioned air from the half-width area of the air outlet 7 and the conditioned air from the other half-width area of the air outlet 7 can be blown in directions to collide with each other.

In the present invention, the form of the horizontal wind-direction plate 10 is not limited to the illustrated from. The number of plates of the horizontal wind-direction plate 10 may be any number. The horizontal wind-direction plate 10 may be divided into three or more groups, the groups may be respectively rotatably joined with coupling rods, and the coupling rods may be individually and independently translated.

### (Vertical Wind-direction Plate)

The vertical wind-direction plate 9 has a rotation center that is parallel to the horizontal direction (Y direction), and is rotatably arranged at the main body 1. A rotation shaft of the front vertical wind-direction plate 9a is coupled with a rotation shaft of the rear vertical wind-direction plate 9b through a link mechanism or a gear mechanism. The rotation shafts are rotated by a common driving motor.

In the present invention, the form of the vertical wind-direction plate 9 is not limited to the illustrated form. The front vertical wind-direction plate 9a and the rear vertical wind-direction plate 9b may be respectively driven by different driving motors. Alternatively, each of the front and rear vertical wind-direction plates 9a and 9b may be divided into two at the center in the left-right direction, to be four parts in total, and the divided parts may be individually and independently rotated.

### (Controller)

A controller (not shown) is arranged in the indoor unit 100. The controller controls the temperature, blowing amount, and other setting of the conditioned air in response to an indoor environment or a request of a user (resident) (hereinafter referred to as "wind-direction control").

The indoor unit 100 specifies a location (or a destination) of a user who is sensitive to heat or cold, and sends the conditioned air toward the specified position. Hence, the user has to cause controller to recognize that the user is "a person who is sensitive to heat or cold" first (for example, immediately after the user enters the room). For the recognition, the user has to approach the indoor unit 100 and cause the indoor unit 100 to recognize the user's face.

Then, the controller recognizes the user, who has approached the indoor unit 100 and whose face has been recognized, as "a person who is sensitive to heat or cold," tracks the movement of the user, and specifies the location of the user. Then, the postures of the horizontal wind-direction plate 10 and the vertical wind-direction plate 9 are controlled (hereinafter referred to as "wind-direction intensive control"), so that the conditioned air is locally (regionally) directed intensively to the specified location (hereinafter referred to as "intensive blowing").

In contrast, if there is not a user who is sensitive to heat or cold (if there is not a user who approaches the indoor unit 100 and causes the indoor unit 100 to recognize user's face), the postures of the horizontal wind-direction plate 10 and the vertical wind-direction plate 9 are controlled (hereinafter referred to as "wind-direction dispersive control"), so that the conditioned air is directed substantially uniformly in the room, or a predetermined blowing mode (for example, a blowing mode in which the conditioned air does not directly hit a specific user) is provided (hereinafter referred to as "dispersive blowing").

### (Recognition for Face of User)

Fig. 4 explains a procedure of recognition for the face of the user. The indoor unit 100 is installed on a wall (hereinafter referred to as "rear wall") 91 in a room 90, at a position near a ceiling 92.

Also, the image pickup device (for example, a CCD camera with 300,000 pixels) 50 has a field 51 toward an obliquely lower side. When a face F1 of a user U1 is present within a range (indicated by shading in the drawing referred to as "face recognition range") 52 between a distance L1 and a distance L2 (> L1) from the image pickup device 50 in the field 51, the controller recognizes the face F1.

Further, when the user U1 approaches the indoor unit 100 and is located at a distance smaller than a distance L3 (> L2) from the image pickup device 50, the controller determines that "the user U1 intends to cause the indoor unit 100 to recognize that the user U1 is sensitive to heat or cold." If the face F1 is not present within the face recognition range 52 although the user U1 is located at a distance smaller than the distance L3, the controller causes the notification device (not shown) to make notification about the situation.

For example, the notification device makes notification, "a face cannot be recognized" or "please come closer" by voice, or causes a lamp indicative of that the face cannot be recognized to be lit or blinked. Alternatively, the notification device may display characters or an image instead of the voice or the lighting or blinking of the lamp.

In contrast, if the face F1 is not recognized (if the face F1 is not within the face recognition range 52) when a predetermined time (for example, 10 seconds) has elapsed although the user U1 is located at a distance smaller than the distance L3 (> L2) from the image pickup device 50, the controller determines that "the user U1 does not intend to cause the indoor unit 100 to recognize that the user U1 is sensitive to heat or cold," or "the user U1 is not sensitive to heat or cold." That is, the controller determines that the wind-direction intensive control is not required.

At this time, the notification device (not shown) may be caused to make notification about the situation. For example, the notification is made by voice like "operation being in normal mode," or the lamp indicative of "operation in normal mode" is lit or blinked.

### (Tracking of User)

After the face F1 of the user U1 is recognized, the controller tracks the user U1 based on the image of the user U1 captured by the image pickup device 50, and specifies the destination (hereinafter referred to as "user position") P1. Then, the conditioned air is locally sent intensively toward the specified user position P1 (intensive blowing is performed).

Immediately after the face F1 is recognized, since the user U1 moves away from the indoor unit 100, after the movement, the stop position or sitting position of the user U1 is specified as the user position P1.

### (Wind-direction Control)

The wind-direction control executed by the controller is described with reference to the flowcharts shown in Figs. 5 and 6 and the plan views in Figs. 7 and 8.

Referring to Figs. 5 and 6, if the face F1 of the user U1 is present within the face recognition range 52 (S1), the controller recognizes the face F1 (S2). Then, it is determined whether the refrigeration cycle is in operation (in cooling operation, in heating operation, etc.) or stopped (S3). If the refrigeration cycle is stopped, the refrigeration cycle is activated (S4).

Also, the movement of the user U1 is tracked (S5). The user position P1, which is the stop position or the sitting position of the user U1, is specified (S6). Then, the postures of the horizontal wind-direction plate 10 and the vertical wind-direction plate 9 are controlled so that the conditioned air is intensively and locally sent toward the user position P1 (intensive blowing is performed) (S7).

Since the intensive blowing toward the user position P1 is started, a person who is sensitive to heat (or cold) other than the user U1 who is also sensitive to heat (or cold) can intensively receive the conditioned air if the person who is sensitive to heat (or cold) is located at the user position P1. It is to be noted that the user U1 who is sensitive to heat (or cold) receives the conditioned air at a position different from a user position P2 at which a user U2 who is not sensitive to heat (or cold) is located.

### (Intensive Blowing)

In part (a) of Fig. 7, if the user position P1 is at the left side in the room 90 (at the left when viewed from the indoor unit 100), both the right horizontal wind-direction plate group 10R and the left horizontal wind-direction plate group 10L (see Fig. 3) are arranged in postures with which the conditioned air is blown toward the user position P1 (postures of intensive blowing). Hence, the user U1 intensively receives the conditioned air for a longer time or by a larger amount as compared with a case in which the conditioned air is blown substantially uniformly in the room 90 (dispersive blowing).

That is, when the user U1 who is sensitive to heat (or cold) enters the room 90 from the outside at a high (or low) temperature, the user U1 does not have to search for the remote controller or does not have to perform an operation of pressing a start button for cooling (or heating) arranged on the remote controller. Cooling (or heating) operation can be started when the face F1 of the user U1 approaches the indoor unit 100. Moreover, as long as the user moves and stops or sits at the predetermined position, the position is automatically specified as the user position P1, and cooling air (or heating air) is sent toward the user position P1. The remote controller or the like does not have to be operated so that the conditioned air reliably reaches the user position.

Accordingly, convenience and comfortableness are increased. That is, local "cooling (cool) mode" is provided for the person who is sensitive to heat, and local "heating (hot) mode" is provided for the person who is sensitive to cold.

The airflow of the blown conditioned air can be seen as a bundle of the conditioned air with a cross section, the size of which is substantially the same as the size of the air outlet, and with a substantially uniform flow rate immediately after the conditioned air is blown. However, the airflow is mixed with the ambient air and spread while flowing in the room 90. When the airflow actually reaches the user position P1, the airflow has a larger cross section than the size of the air outlet, and even in the cross section, bundles of the airflows with various flowing directions at various flow rates are collected.

Owing to this, "being locally intensive" or "intensive blowing" according to the present invention represents that the center obtained when the spreading airflows are averaged is "directed toward the specific position," and represents that the conditioned air reaches the periphery of the user position P1.

In the above description, the conditioned air is blown from both the right horizontal wind-direction plate group 10R and the left horizontal wind-direction plate group 10L blow toward the user position P1. However, the procedure of the intensive blowing of the present invention is not limited thereto.

For example, as shown in part (b) of Fig. 7, the left horizontal wind-direction plate group 10L may be fixed in a posture for guiding the conditioned air toward the user position P1, and the right horizontal wind-direction plate group 10R may rotate (swing) to guide the conditioned air while reciprocating in a predetermined range (in the drawing, indicated by α) containing the user position P1 and the user position P2.

Then, the conditioned air is intensively blown by a relatively large amount to the user U1 who is sensitive to heat (or cold), therefore, the comfortableness of the user U1 is increased, and meanwhile the conditioned air is intermittently blown by a relatively small amount in a range excluding the user position P1.

Hence, If the user U2 whose sensitive temperature is different from that of the user U1 and who is not sensitive to heat (or cold) is located at the user position P2 different from the user position P1, the conditioned air is intermittently blown by a relatively small amount toward the user position P2. The comfortableness of the user U2 is also maintained.

Further, as shown in part (c) of Fig. 7, both the right horizontal wind-direction plate group 10R and the left horizontal wind-direction plate group 10L may guide the conditioned air by rotating (swinging) to the predetermined range (in the drawing, indicated by α) containing the user position P1 and the user position P2, and the swing speed may be decreased (the blowing time may be increased) in a range facing the user position P1 (in the drawing, indicated by β) as compared with the other range. Then, like the case shown in part (b) of Fig. 7, the comfortableness of the user U1 who is sensitive to heat (or cold) and the user U2 who is not sensitive to heat (or cold) is maintained.

The selection of the procedure of the intensive blowing (selection of any one of part (a), part (b), and part (c) of Fig. 7) may be previously determined. Alternatively, the user U1 who is sensitive to heat (or cold) may determine or change by using the remote controller or the like when the intensive blowing is started or after the intensive blowing is started.

In Fig. 6, during the execution of the intensive blowing, if the user U1 or the other user operates the remote operation device (remote controller, not shown) and presses a button for stopping the intensive blowing (S8 in Fig. 5), the controller stops the intensive blowing, and starts dispersive blowing (S10). That is, the conditioned air is not intensively blown toward the user position P1, but the dispersive blowing is started.

Meanwhile, during the execution of the intensive blowing, if the button for stopping the intensive blowing is not pressed (S8), the controller continues the tracking for the position of the user U1 whose face F1 is recognized.

Then, if it is determined that the user U1 is located at the user position P1 for a predetermined time (for example, 30 minutes) without moving from the position (S11), the intensive blowing is stopped, and the dispersive blowing is started (S10). That is, it is expected that the user U1 who is sensitive to heat (or cold) is cooled (or heated) by the intensive blowing for the predetermined time, and the user U1 feels comfortable even if the mode is changed to normal cooling (heating).

In contrast, if it is determined that the user U1 moves from the position before the predetermined time elapses (for example, 30 minutes) (S11), it is further determined whether the user U1 is located in the room 90 or outside the room 90 (S12).

If it is determined that the user U1 is located in the room 90, a user position P3 that is the destination of the user U1 is specified (S13). If it is determined that the other user is not in the room 90 (S14), the intensive blowing toward the user position P3 is started instead of the intensive blowing toward the user position P1 (S15, see part (a) of Fig. 8).

Meanwhile, if it is determined that the other user is present, the user position P2 at which the other user U2 (who is not sensitive to heat (or cold)) is specified, and it is determined whether or not the user position P3 that is the destination of the user U1 coincides with the user position P2 (S16).

If it is determined that the user U1 moves to the user position P2 (if the user position P3 coincides with the user position P2) in S16, the intensive blowing is stopped, and the dispersive blowing is started (S10, see part (b) of Fig. 8). That is, the comfortableness of the other user U2 is not disturbed.

Meanwhile, if it is determined that the user U1 moves to a position other than the user position P2 (if the user position P3 is different from the user position P2), the intensive blowing toward the user position P3 that is the destination is started instead of the intensive blowing toward the user position P1 (S15, see part (b) of Fig. 8).

After it is determined that the user U1 leaves the room 90 in S12, if the button for stopping the intensive blowing is pressed (S17), as long as a user is located in the room 90 (S9), the intensive blowing is stopped, and the dispersive blowing is started (S10). Meanwhile, after the user U1 leaves the room 90, if a predetermined time (for example, 10 minutes) elapses (S18), as long as a user is located in the room 90 (S9), the intensive blowing is stopped, and the dispersive blowing is started (S10, see part (c) of Fig. 8). That is, after the user U1 leaves the room 90, regardless of whether the user U1 returns or not, as long as anyone (a user) is located in the room 90, the blowing is changed to the dispersive blowing when the predetermined time (time) has elapsed since the intensive blowing is started.

If it is determined that no one is in the room (a user is not present) in S9, the refrigeration cycle is stopped (S20). Also, if it is determined that a user is present in the room in S9, the intensive blowing is stopped, and the dispersive blowing is started (S10).

Further, during the dispersive blowing, if anyone (a user) operates the remote operation device (remote controller, not shown) and presses the button for stopping the dispersive blowing (stop button for cooling or heating etc.) (S19), the operation of the refrigeration cycle is stopped (S20).

### [Embodiment 2]

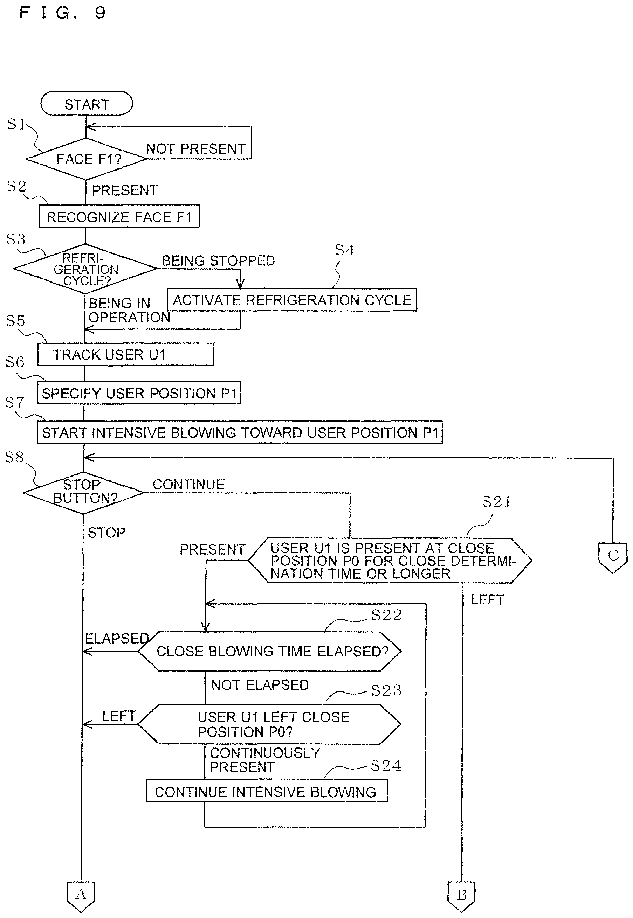

Fig. 9 is a flowchart for explaining an indoor unit of an air-conditioning apparatus according to Embodiment 2 of the present invention. The same parts as or corresponding to those in Embodiment 1 are designated by the same reference signs, and the description is partly omitted.

An indoor unit 200 of an air-conditioning apparatus (hereinafter referred to as "indoor unit") according to Embodiment 2 responds to a demand of a user who wants to be temporarily rapidly cooled immediately after the user takes a bath or the user enters the room from the hot (or cold) outdoor environment (hereinafter referred to as "bathed person").

In particular, the indoor unit 100 according to Embodiment 1 tracks the movement of the user U1 whose face has been recognized, and provides the intensive blowing toward the user position P1 that is the destination (see S7 in Fig. 5). If the user U1 is continuously located at the user position P1 that is the destination for a predetermined time (for example, 30 minutes), when the predetermined time has elapsed (for example, 30 minutes), the intensive blowing is stopped, and the dispersive blowing is started (see S10 and S11 in Fig. 6).

Hence, with the indoor unit 100 according to Embodiment 1, the bathed person activates the indoor unit 100 through the face recognition of the bathed person immediately after the person takes a bath, keeps on standing at a close position P0 of the indoor unit 100 (the position at which the face F1 of the user U1 is present within the face recognition range 52, and a relatively narrow area containing the range, see Fig. 7), and if the user leaves the close position P0 after a close determination time (for example, 10 minutes) which is a predetermined time elapses, the intensive blowing is continued toward the moving bathed person. At this time, the bathed person may not desire the intensive blowing but may desire the dispersive blowing, therefore the indoor unit 200 according to Embodiment 2 addresses this situation.

In Fig. 9, when the indoor unit 200 starts the intensive blowing toward the user position P1 of the user standing at the close position P0 (S7), and when the intensive blowing is continued (S8), it is determined whether or not the user U1 is continuously located (keeps on standing) at the close position P0 even when a close determination time (for example, 30 seconds) which is a predetermined time has elapsed (S21).

That is, if the user U1 is the "bathed person," the intensive blowing is executed toward the close position P0 (at this time, the user position P1 coincides with the close position P0). Hence, the user U1 can be cooled at the close position P0 (S22). The intensive blowing is continued for a close blowing time (for example, 10 minutes) which is a predetermined time until the cooling down is finished (S22). When the close blowing time (for example, 10 minutes) has elapsed, the blowing is shifted to the dispersive blowing (see S9 and S10 in Fig. 6).

If the user U1 finishes the cooling down and leaves the close position P0 before the close blowing time (for example 10 minutes) elapses (S23), when the user U1 leaves the close position P0, the blowing is shifted to the dispersive blowing (see S9 and S10 in Fig. 6). Meanwhile, if the user U1 is continuously present at the close position P0, the intensive blowing is continued (S24).

In contrast, in the case where if the user U1 is not the "bathed person" and after the face is recognized at the close position P0 and the person leaves the close position P0 before the close determination time (for example, 30 seconds) elapses (S21).

In this case, like the indoor unit 100 according to Embodiment 1, the movement of the user U1 is tracked, the intensive blowing is continued toward the user position P1 (in this case, the user position P1 is different from the close position P0), and when a predetermined time (for example, 30 minutes) has elapsed again, it is determined whether or not the user U1 moves from the user position P1 (see S11 in Fig. 6). The processes after the determination are similar to those of the indoor unit 100 according to Embodiment 1.

As described above, since the indoor unit 200 according to Embodiment 2 executes the steps (the processes), the user U1 who is the bathed person can quickly activate the refrigeration cycle by merely standing at the close position P0 without an operation of the remote controller or the like. In addition, as long as the user U1 keeps on standing at the close position P0, the user U1 can be cooled by the intensive blowing until the close blowing time elapses.

Then, when the close blowing time has elapsed, or when the user U1 who is the bathed person leaves the close position P0 (corresponding to a timing at which the user is expected to finish the cooling down), the intensive blowing is stopped, and the dispersive blowing is started.

Hence, the user U1 who is the bathed person can start to be cooled easily and quickly without an operation of the remote controller or the like. Also, after the cooling down, the user is not exposed to the intensive airflow without an operation of the remote controller or the like. The user can enjoy the comfortable air-conditioned environment.

Also, the comfortableness is maintained for the user U1 who is not the bathed person but is sensitive to heat (or cold), or the user U2 who is not the bathed person or is not sensitive to heat (or cold), as with the same with the indoor unit 100 according to Embodiment 1.

### [Embodiment 3]

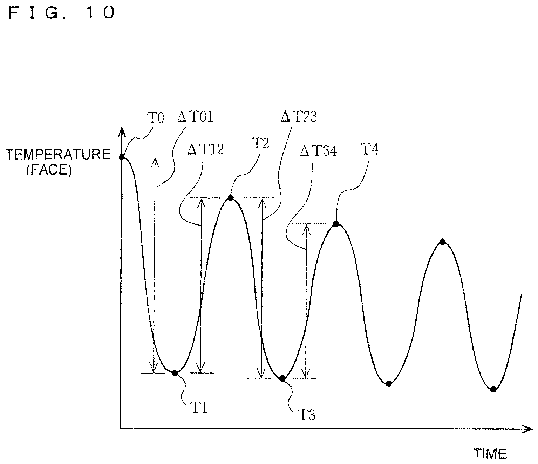

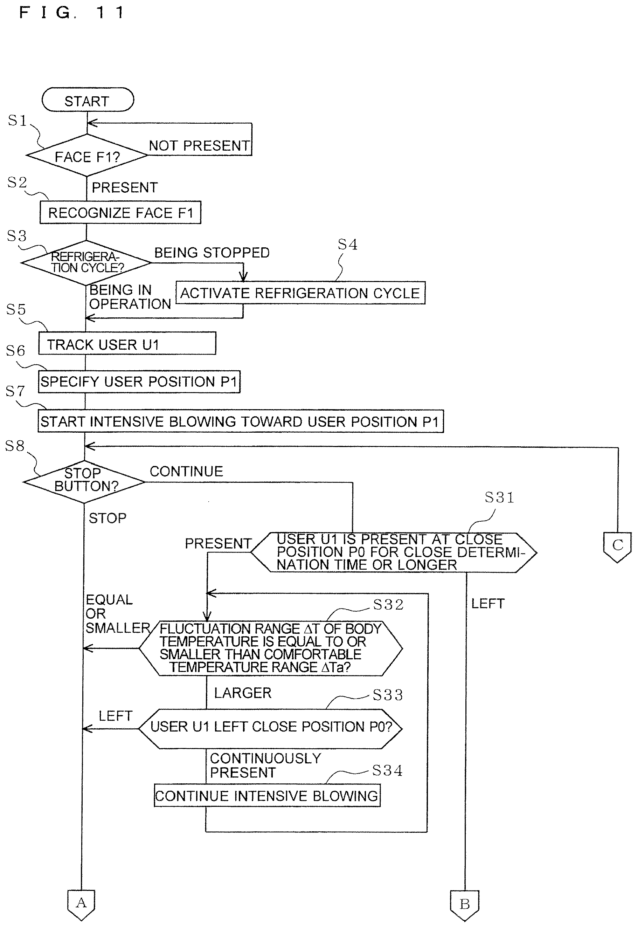

Figs. 10 and 11 explain an indoor unit of an air-conditioning apparatus according to Embodiment 3 of the present invention. Fig. 10 is a temperature change chart schematically showing a change in temperature of swing blowing. Fig. 11 is a flowchart showing control steps. The same parts as or corresponding to those in Embodiment 2 are designated by the same reference signs, and the description is partly omitted.

An indoor unit 300 of an air-conditioning apparatus (hereinafter referred to as "indoor unit") according to Embodiment 3 responds to a demand of a user who wants to be temporarily rapidly cooled (or heated) immediately after the user takes a bath or the user enters the room from the hot (or cold) outdoor environment (hereinafter referred to as "bathed person"), as with the same with the indoor unit 200 (Embodiment 2).

With the indoor unit 200 in Embodiment 2, if the user U1 is the "bathed person," the intensive blowing is executed toward the close position P0, the intensive blowing is continued for the close blowing time (for example, 10 minutes) which is the predetermined time until the cooling down is finished (see S22 in Fig. 9), and when the close blowing time (for example, 10 minutes) has elapsed, the blowing is shifted to the dispersive blowing (see S9 and S10 in Fig. 6).

However, depending on the heating (cooling) state of the user U1, the close blowing time which is the predetermined time until the cooling (heating) is finished is not constant. The indoor unit 300 determines the timing at which the blowing is shifted to the dispersive blowing with regard to a change in body temperature of the user U1, in place of the close blowing time.

The indoor unit 300 includes temperature detecting means (temperature sensor, not shown) capable of detecting the surface temperature of the face of the user U1 standing at the close position P0. The controller (not shown) controls the vertical wind-direction plate 9 and the horizontal wind-direction plate 10 based on position information of the person whose image has been captured by the image pickup device 50 and body temperature information of the person detected by the temperature detecting means.

Also, the conditioned air is repeatedly and intermittently blown toward the user U1 who is the "bathed person" standing at the close position P0 (hereinafter referred to as "swing blowing").

That is, a cycle is repeated in which the conditioned air is blown to the face of the user U1 for a predetermined time and then the conditioned air is not blown to the face of the user U1 for a next predetermined time (the conditioned air is blown to a position other than the face of the user U1) by rotating the vertical wind-direction plate 9. Alternatively, swing blowing may be similarly performed by rotating the horizontal wind-direction plate 10 instead of the vertical wind-direction plate 9.

Fig. 10 schematically shows a change in temperature of the face of the user U1 during the swing blowing. In Fig. 10, if the surface temperature of the face immediately after the user takes a bath is a temperature T0, the surface temperature of the face is decreased to a temperature T1 by first intensive blowing to the face. Then, when the intensive blowing to the face is intermitted, the heat of the surface of the face is recuperated, and the surface temperature is increased to a temperature T2. Then, by second intensive blowing to the face, the surface temperature of the face is decreased to a temperature T3. Further, when the intensive blowing to the face is intermitted, the surface temperature is increased to a temperature T4. Thereafter, by intermittently repeating the intensive blowing, the surface temperature of the face during the intensive blowing and the surface temperature of the face after the heat recuperation are gradually decreased.

At this time, the degree of the decrease in surface temperature of the face after the heat recuperation by repeating the swing blowing (for example, a difference between the temperature T2 and the temperature T4) is larger than the degree of the decrease in surface temperature of the face during the intensive blowing by repeating the swing blowing (for example, a difference between the temperature T1 and the temperature T3).

Hence, the differences are gradually decreased in the order from a decrease amount ΔT01 of the surface temperature of the face by the first intensive blowing (the difference between the temperature T0 and the temperature T1), an increase amount ΔT12 of the surface temperature of the face by the first heat recuperation (the difference between the temperature T2 and the temperature T1), a decrease amount ΔT23 of the surface temperature of the face by the second intensive blowing (the difference between the temperature T3 and the temperature T2), and an increase amount ΔT34 of the surface temperature of the face by the second heat recuperation (the difference between the temperature T4 and the temperature T3).

Then, if the decrease amount of the surface temperature of the face by the intensive blowing or the increase amount of the surface temperature of the face by the heat recuperation (hereinafter referred to as "body-temperature fluctuation range ΔT") becomes equal to or smaller than a comfortable temperature range ΔTa (for example, 1 degree C) which is a predetermined temperature, it may be conceived that the user U1 feels refreshed (cooled or heated).

In Fig. 11, when the indoor unit 300 starts the intensive blowing toward the user position P1 of the user standing at the close position P0 (see S7 in Fig. 5), and when the intensive blowing is continued (see S8 in Fig. 5), it is determined whether or not the user U1 is continuously present (keeps on standing) at the close position P0 even if a close determination time (for example, 30 seconds) which is a predetermined time has elapsed (S31).

Then, if the user U1 is continuously present (keeps on standing) at the close position P0 even when the close determination time has elapsed, it is determined that the user U1 is the "bathed person," and the swing blowing is started (S32). The swing blowing is continued until the user U1 feels refreshed (cooled or heated), that is, until the body-temperature fluctuation range ΔT is equivalent to or smaller than the predetermined comfortable temperature range ΔTa (ΔT > ΔTa) (S34). When the body-temperature fluctuation range ΔT becomes equal to or smaller than the comfortable temperature range ΔTa which is the predetermined value (ΔT ≤ ΔTa), the blowing is shifted to the dispersive blowing (see S9 and S10 in Fig. 6).

Also, if the user U1 leaves the close position P0 before the body-temperature fluctuation range ΔT becomes equal to or smaller than the comfortable temperature range ΔTa, which is the predetermined value (ΔT > ΔTa) (S33), the blowing is shifted to the dispersive blowing at the timing of the leaving (see S9 and S10 in Fig. 6).

In contrast, if the user U1 is not the "bathed person," after the face is recognized at the close position P0, the person leaves the close position P0 before the close determination time (for example, 30 seconds) elapses (S31).

In this case, like the indoor unit 100 according to Embodiment 1, the movement of the user U1 is tracked, the intensive blowing is continued toward the user position P1 (in this case, the user position P1 is different from the close position P0), and when a predetermined time (for example, 30 minutes) has elapsed, it is determined whether or not the user U1 moves from the user position P1 (see S11 in Fig. 6). The processes after the determination are similar to those of the indoor units 100 and 200 according to Embodiments 1 and 2.

As described above, since the indoor unit 300 according to Embodiment 3 executes the steps (processes), the user U1 who is the bathed person can quickly activate the refrigeration cycle by merely standing at the close position P0 without an operation of the remote controller or the like. In addition, the user U1 can be rapidly cooled (heated) by the intensive blowing until the user U1 feels refreshed (cooled or heated). Further, after the user U1 feels refreshed, the user U1 can be gently cooled (heated) by the dispersive blowing without an operation of the remote controller or the like.

Hence, the user U1 who is the bathed person can start to be cooled easily and quickly without an operation of the remote controller or the like. Also, after the cooling down, the user is not exposed to the intensive airflow without an operation of the remote controller or the like. Accordingly, the user can enjoy the comfortable air-conditioned environment.

Also, the comfortableness is maintained for the user U1 who is not the bathed person but is sensitive to heat (or cold), or the user U2 who is not the bathed person nor is not sensitive to heat (or cold), as with the same with the indoor unit 100 according to Embodiment 1.

Lastly, the body-temperature fluctuation range ΔTc is supplementarily explained.

The body-temperature fluctuation range ΔT may be a decrease amount of the surface temperature of the face by certain repetitive intensive blowing (for the example of the first intensive blowing, ΔT = ΔT01 = T0 - T1), an increase amount of the surface temperature of the face by heat recuperation (for the example of the first heat recuperation, ΔT = ΔT12 = T2 - T1), or an average value of both (ΔT = (ΔT01 + ΔT12) / 2).

Moreover, the body-temperature fluctuation range ΔT may be an average value between a decrease amount of the surface temperature of the face by a plurality of times of the intensive blowing and an increase amount of the surface temperature of the face by a plurality of times of the heat recuperation (for the example of the first and second times, ΔT = (ΔT01 + ΔT12 + ΔT23 + ΔT34) / 4. By using the average value of the decrease amount and the increase amount for the plurality of times, determination can be made while an influence of a variation in actual surface temperature or temperature detection is restricted.

### Reference Signs List

1 main body, 2 front panel, 3 air inlet, 4 heat exchanger, 4a heat-exchanger front portion, 4b heat-exchanger upper front portion, 4c heat-exchanger upper rear portion, 5 fan, 6 air path, 7 air outlet, 8 drain pan, 8a upper surface, 8b lower surface, 9 vertical wind-direction plate, 9a front vertical wind-direction plate, 9b rear vertical wind-direction plate, 10L left horizontal wind-direction plate group, 10R right horizontal wind-direction plate group, 10a-10n horizontal wind-direction plate, 20L left coupling rod, 20R right coupling rod, 30L left driving means, 40 receiver,50 image pickup device, 51 field, 52 face recognition range, 90 room, 91 rear wall, 92 ceiling, 100 indoor unit (Embodiment 1), 200 indoor unit (Embodiment 2), 300 indoor unit (Embodiment 3), F1 face, L1 distance, L2 distance, L3 distance, P0 close position, P1 user position, P2 user position, P3 user position, U1 user, U2 user.

## Claims

1. An indoor unit (100) of an air-conditioning apparatus, comprising:
a main body (1) having an air inlet (3) and an air outlet (7), the main body (1) being installable on a wall surface (91) in a room (90);
a fan (5) configured to suck indoor air from the air inlet (3) and form an air path (6) to the air outlet (7);
a heat exchanger (4) arranged in the air path (6) and executes part of a refrigeration cycle;
a wind-direction adjusting device (9, 10) arranged at the air outlet (7) and configured to adjust a blowing direction of air conditioned by the heat exchanger (4);
an image pickup device (50) configured to capture an image of the inside of the room (90);
a controller configured to control the wind-direction adjusting device (9, 10) based on information on a person (U1) whose image has been captured by the image pickup device (50); and
a receiver (40) configured to receive a signal from a remote controller,
wherein the controller recognizes a face (F1) of a person (U1), when the face (F1) of the person (U1) is present within a face recognition range (52) between a first distance (L1) and a second distance (L2), greater than the first distance (L1), from the image pickup device (50) in a field (51) of the image pickup device (50),
activates the refrigeration cycle when the controller recognizes the face (F1) of the person (U1) while the refrigeration cycle is stopped,
when the person (U1) whose face (F1) has been recognized moves, tracks the person (U1) whose face (F1) has been recognized and specifies a position (P1) of the person (U1) whose face (F1) has been recognized, and
controls the wind-direction adjusting device (9, 10) so that the conditioned air is blown toward the specified position (P1).

2. The indoor unit of the air-conditioning apparatus of claim 1, wherein, when the controller controls the wind-direction adjusting device (9, 10), if the controller determines that the person (U1) whose face (F1) has been recognized moves to the outside of the room (90), the controller continues the control for the wind-direction adjusting device (9, 10) after the determination until a predetermined time elapses, and when the predetermined time has elapsed, the controller stops the control for the wind-direction adjusting device (9, 10).

3. The indoor unit of the air-conditioning apparatus of claim 1, wherein the controller controls the wind-direction adjusting device (9, 10) so that the conditioned air is blown toward the specified position (P1) for a longer time or by a larger amount as compared with a position (P2) separated from the specified position (P1).

4. The indoor unit of the air-conditioning apparatus of claim 1, wherein, when the controller controls the wind-direction adjusting device (9, 10), if the controller determines that the person (U1) whose face (F1) has been recognized is located at the specified position (P1) even when a predetermined time has elapsed, the controller controls the wind-direction adjusting device (9, 10) so that the conditioned air is blown substantially uniformly in the room (90).

5. The indoor unit of the air-conditioning apparatus of claim 1, wherein, when the controller controls the wind-direction adjusting device (9, 10), if the controller determines that a person (U2) other than the person (U1) whose face (F1) has been recognized is located at the specified position (P1), the controller controls the wind-direction adjusting device (9, 10) so that the conditioned air is blown substantially uniformly in the room (90).

6. The indoor unit of the air-conditioning apparatus of claim 1, further comprising a notification device,
wherein if the controller determines that a person approaches the main body (1) and if the controller cannot recognize the face of the person, the controller causes the notification device to make notification about the situation.

7. The indoor unit of the air-conditioning apparatus of claim 1, further comprising :
a remote operation device configured to send a signal which at least stops the control of the wind-direction adjusting device (9, 10), when the wind-direction adjusting device (9, 10) is controlled.

## Patentansprüche

1. Innenraumeinheit (100) einer Klimaanlage, umfassend:
einen Hauptkörper (1) mit einem Lufteinlass (3) und einem Luftauslass (7), wobei der Hauptkörper (1) an einer Wandfläche (91) in einem Raum (90) installiert werden kann;
einen Lüfter (5), der konfiguriert ist, um Innenluft vom Lufteinlass (3) anzusaugen und einen Luftpfad (6) zum Luftauslass (7) zu bilden;
einen Wärmetauscher (4), der im Luftpfad (6) angeordnet ist und einen Teil eines Kühlkreislaufs ausführt;
eine Windrichtungs-Einstellvorrichtung (9, 10), die an dem Luftauslass (7) angeordnet und konfiguriert ist, um eine Blasrichtung von durch den Wärmetauscher (4) klimatisierter Luft einzustellen;
eine Bildaufnahmevorrichtung (50), die konfiguriert ist, um ein Bild des Inneren des Raums (90) aufzunehmen;
eine Steuervorrichtung, die konfiguriert ist, um die Windrichtungs-Einstellvorrichtung (9, 10) basierend auf Informationen über eine Person (U1), deren Bild von der Bildaufnahmevorrichtung (50) aufgenommen wurde, zu steuern; und
einen Empfänger (40), der konfiguriert ist, um ein Signal von einer Fernsteuervorrichtung zu empfangen,
wobei die Steuervorrichtung
ein Gesicht (F1) einer Person (U1) erkennt, wenn das Gesicht (F1) der Person (U1) innerhalb eines Gesichtserkennungsbereichs (52) zwischen einem ersten Abstand (L1) und einem zweiten Abstand (L2), der größer als der erste Abstand (L1) ist, von der Bildaufnahmevorrichtung (50) in einem Feld (51) der Bildaufnahmevorrichtung (50) vorhanden ist,
den Kühlkreislauf aktiviert, wenn die Steuervorrichtung das Gesicht (F1) der Person (U1) erkennt, während der Kühlkreislauf gestoppt ist,
die Person (U1), deren Gesicht (F1) erkannt wurde, verfolgt und eine Position (P1) der Person (U1), deren Gesicht (F1) erkannt wurde, spezifiziert, wenn sich die Person (U1), deren Gesicht (F1) erkannt wurde, bewegt, und
die Windrichtungs-Einstellvorrichtung (9, 10) steuert, so dass die klimatisierte Luft in Richtung der spezifizierten Position (P1) geblasen wird.

2. Innenraumeinheit der Klimaanlage nach Anspruch 1, wobei, wenn die Steuervorrichtung die Windrichtungs-Einstellvorrichtung (9, 10) steuert, wenn die Steuervorrichtung bestimmt, dass die Person (U1), deren Gesicht (F1) erkannt wurde, sich aus dem Raum (90) nach außen bewegt, die Steuervorrichtung die Steuerung für die Windrichtungs-Einstellvorrichtung (9, 10) nach der Bestimmung fortführt, bis ein vorbestimmter Zeitraum verstrichen ist, und wenn der vorbestimmte Zeitraum verstrichen ist, stoppt die Steuervorrichtung die Steuerung für die Windrichtungs-Einstellvorrichtung (9, 10).

3. Innenraumeinheit der Klimaanlage nach Anspruch 1, wobei die Steuervorrichtung die Windrichtungs-Einstellvorrichtung (9, 10) steuert, so dass die klimatisierte Luft für einen längeren Zeitraum oder in einer größeren Menge in Richtung der spezifizierten Position (P1) geblasen wird im Vergleich zu einer Position (P2), die von der spezifizierten Position (P1) getrennt ist.

4. Innenraumeinheit der Klimaanlage nach Anspruch 1, wobei, wenn die Steuervorrichtung die Windrichtungs-Einstellvorrichtung (9, 10) steuert, wenn die Steuervorrichtung bestimmt, dass die Person (U1), deren Gesicht (F1) erkannt wurde, sich an der spezifizierten Position (P1) befindet, selbst wenn ein vorbestimmter Zeitraum verstrichen ist, steuert die Steuervorrichtung die Windrichtungs-Einstellvorrichtung (9, 10), so dass die klimatisierte Luft im Wesentlichen gleichförmig in den Raum (90) geblasen wird.

5. Innenraumeinheit der Klimaanlage nach Anspruch 1, wobei, wenn die Steuervorrichtung die Windrichtungs-Einstellvorrichtung (9, 10) steuert, wenn die Steuervorrichtung bestimmt, dass eine andere Person (U2) als die Person (U1), deren Gesicht (F1) erkannt wurde, sich an der spezifizierten Position (P1) befindet, steuert die Steuervorrichtung die Windrichtungs-Einstellvorrichtung (9, 10), so dass die klimatisierte Luft im Wesentlichen gleichmäßig in den Raum (90) geblasen wird.

6. Innenraumeinheit der Klimaanlage nach Anspruch 1, ferner umfassend eine Benachrichtigungsvorrichtung,
wobei, wenn die Steuervorrichtung bestimmt, dass sich eine Person dem Hauptkörper (1) nähert, und wenn die Steuervorrichtung das Gesicht der Person nicht erkennen kann, die Steuervorrichtung bewirkt, dass die Benachrichtigungsvorrichtung eine Benachrichtigung über die Situation erstellt.

7. Innenraumeinheit der Klimaanlage nach Anspruch 1, ferner umfassend:
eine Fernbedienungsvorrichtung, die konfiguriert ist, um ein Signal zu senden, das zumindest die Steuerung der Windrichtungs-Einstellvorrichtung (9,10) stoppt, wenn die Windrichtungs-Einstellvorrichtung (9, 10) gesteuert wird.

## Revendications

1. Unité intérieure (100) d'un appareil de climatisation, comprenant :
un corps principal (1) ayant une entrée d'air (3) et une sortie d'air (7), le corps principal (1) étant apte à être installé sur une surface de mur (91) dans une pièce (90) ;
une soufflante (5) configurée pour aspirer de l'air intérieur par l'entrée d'air (3) et former un passage d'air (6) jusqu'à la sortie d'air (7) ;
un échangeur de chaleur (4) agencé dans le passage d'air (6) et qui exécute une partie d'un cycle de réfrigération ;
un dispositif de réglage de direction du vent (9, 10) agencé au niveau de la sortie d'air (7) et configuré pour régler une direction de soufflage d'un air climatisé par l'échangeur de chaleur (4) ;
un dispositif de saisie d'image (50) configuré pour capturer une image de l'intérieur de la pièce (90) ;
un dispositif de commande configuré pour commander le dispositif de réglage de direction du vent (9, 10) sur la base d'informations sur une personne (U1) dont l'image a été capturée par le dispositif de saisie d'image (50) ; et
un récepteur (40) configuré pour recevoir un signal provenant d'un dispositif de commande à distance,
dans laquelle le dispositif de commande
reconnaît un visage (F1) d'une personne (U1), lorsque le visage (F1) de la personne (U1) est présent au sein d'une plage de reconnaissance faciale (52) entre une première distance (L1) et une deuxième distance (L2), supérieure à la première distance (L1), par rapport au dispositif de saisie d'image (50) dans un champ (51) du dispositif de saisie d'image (50),
active le cycle de réfrigération lorsque le dispositif de commande reconnaît le visage (F1) de la personne (U1) alors que le cycle de réfrigération est interrompu,
lorsque la personne (U1) dont le visage (F1) a été reconnu se déplace, suit la personne (U1) dont le visage (F1) a été reconnu et spécifie une position (P1) de la personne (U1) dont le visage (F1) a été reconnu, et
commande le dispositif de réglage de direction du vent (9, 10) de sorte que l'air climatisé soit soufflé vers la position (P1) spécifiée.

2. Unité intérieure de l'appareil de climatisation selon la revendication 1, dans laquelle, lorsque le dispositif de commande réalise une commande du dispositif de réglage de direction du vent (9, 10), si le dispositif de commande détermine que la personne (U1) dont le visage (F1) a été reconnu se déplace jusqu'en dehors de la pièce (90), le dispositif de commande poursuit la commande pour le dispositif de réglage de direction du vent (9, 10) après la détermination jusqu'à ce qu'un temps prédéterminé s'écoule, et lorsque le temps prédéterminé s'est écoulé, le dispositif de commande interrompt la commande pour le dispositif de réglage de direction du vent (9, 10).

3. Unité intérieure de l'appareil de climatisation selon la revendication 1, dans laquelle le dispositif de commande réalise une commande du dispositif de réglage de direction du vent (9, 10) de sorte que l'air climatisé soit soufflé vers la position (P1) spécifiée pendant un temps plus long ou en une plus grande quantité comparativement à une position (P2) séparée de la position (P1) spécifiée.

4. Unité intérieure de l'appareil de climatisation selon la revendication 1, dans laquelle, lorsque le dispositif de commande réalise une commande du dispositif de réglage de direction du vent (9, 10), si le dispositif de commande détermine que la personne (U1) dont le visage (F1) a été reconnu est située à la position (P1) spécifiée même lorsqu'un temps prédéterminé s'est écoulé, le dispositif de commande réalise une commande du dispositif de réglage de direction du vent (9, 10) de sorte que l'air climatisé soit soufflé sensiblement uniformément dans la pièce (90).

5. Unité intérieure de l'appareil de climatisation selon la revendication 1, dans laquelle, lorsque le dispositif de commande réalise une commande du dispositif de réglage de direction du vent (9, 10), si le dispositif de commande détermine qu'une personne (U2) autre que la personne (U1) dont le visage (F1) a été reconnu est située à la position (P1) spécifiée, le dispositif de commande réalise une commande du dispositif de réglage de direction du vent (9, 10) de sorte que l'air climatisé soit soufflé sensiblement uniformément dans la pièce (90).

6. Unité intérieure de l'appareil de climatisation selon la revendication 1, comprenant en outre un dispositif de notification,
dans laquelle si le dispositif de commande détermine qu'une personne s'approche du corps principal (1) et si le dispositif de commande ne peut pas reconnaître le visage de la personne, le dispositif de commande amène le dispositif de notification à adresser une notification concernant la situation.

7. Unité intérieure de l'appareil de climatisation selon la revendication 1, comprenant en outre :
un dispositif d'actionnement à distance configuré pour envoyer un signal qui au moins interrompt la commande du dispositif de réglage de direction du vent (9, 10), lorsque le dispositif de réglage de direction du vent (9, 10) est commandé.
